# EUROPÄISCHE PATENTSCHRIFT

(11) **EP 2 959 025 B1**
(45) Veröffentlichungstag und Bekanntmachung des Hinweises auf die Patenterteilung: **04.10.2017**
(21) Anmeldenummer: 13776799.2
(22) Anmeldetag: 14.10.2013
(51) Int. Cl.: C21D 1/26, C23C 2/28, C21D 9/46, C21D 8/02, C21D 9/52, C21D 9/60, C21D 1/42, C21D 1/74, C22C 38/00

(54) **VERFAHREN ZUR HERSTELLUNG EINES KORROSIONSBESTÄNDIGEN STAHLBLECHS**
METHOD FOR PRODUCING A CORROSION-RESISTANT STEEL SHEET
PROCÉDÉ DE FABRICATION D'UNE TÔLE D'ACIER RÉSISTANTE À LA CORROSION

(30) Priorität: 25.02.2013 DE 102013101847
(43) Veröffentlichungstag der Anmeldung: 30.12.2015
(73) Patentinhaber: ThyssenKrupp Rasselstein GmbH, 56626 Andernach (DE)
(72) Erfinder: OBERHOFFER, Helmut, 56727 St. Johann (DE); SZESNI, Anika, 56220 Kettig (DE); KÖHL, Manuel, 56743 Mendig (DE); NOUSKALIS, Dimitrios, 56659 Burgbrohl (DE); SAUER, Reiner, 56566 Heimbach-Weis (DE)
(74) Vertreter: Charrier Rapp & Liebau
(86) Internationale Anmeldenummer: PCT/EP2013/071399
(87) Internationale Veröffentlichungsnummer: WO 2014/127858

(56) Entgegenhaltungen:
- BE-A6- 1 008 976
- DE-A1- 19 646 362

## Beschreibung

Die Erfindung betrifft ein Verfahren zur Herstellung eines korrosionsbeständigen Stahlblechs aus einem un- oder niedriglegierten und kaltgewalzten Stahl mit einem Kohlenstoffgehalt von weniger als 0,1 Gew.% zur Verwendung als Verpackungsstahl.

Aus der CH 469 810 ist ein dünnwandiges Stahlprodukt in Blech- oder Bandform und ein Verfahren zu dessen Herstellung bekannt, welches für die Herstellung von Weißblech mit höherer Festigkeit verwendet werden kann. Das Stahlprodukt ist aus einem unlegierten Stahl mit einem Kohlenstoffgehalt von 0,03 Gew.% - 0,25 Gew.% hergestellt und weist einen Mangangehalt von 0,2 Gew.% - 0,6 Gew.% sowie einen Siliciumgehalt von weniger als 0,011 Gew.% auf. Das Stahlprodukt zeichnet sich durch ein mindestens teilweise aus Martensit und Ferrit bestehendes Feingefüge aus und weist Zugfestigkeiten von mindestens 6328 kg/cm² und eine Bruchdehnung von mindestens 1,5 % auf. Zur Ausbildung dieser Eigenschaften wird das Stahlprodukt in einem Ofen zunächst auf eine Temperatur oberhalb des A₁-Punktes erhitzt und anschließend in einem Wasserbad abgeschreckt. Die Verzinnung dieses Stahlprodukts erfolgt dann in bekannter Weise nach dem Erhitzen und dem Abschrecken des Stahlbands in einer elektrolytischen Verzinnungsstrecke.

An die Eigenschaften von metallischen Materialien zur Herstellung von Verpackungen werden zunehmend höhere Anforderungen gestellt, insbesondere hinsichtlich ihrer Umformbarkeit und ihrer Festigkeit sowie ihrer Korrosionsbeständigkeit. Zwar sind aus dem Automobilbau sogenannte Dualphasenstähle bekannt, welche ein mehrphasiges Gefüge aufweisen, welches im Wesentlichen aus Martensit und Ferrit bzw. Bainit besteht, und welche einerseits über eine hohe Zugfestigkeit und andererseits auch über eine hohe Bruchdehnung verfügen. Ein solcher Dualphasenstahl mit einer Streckgrenze von mindestens 580 MPa und einer Bruchdehnung A₈₀ von mindestens 10% ist beispielsweise aus der WO 2009/021898 A1 bekannt. Aufgrund der Kombination der Materialeigenschaften solcher Dualphasenstähle mit einer hohen Festigkeit und einer guten Verformbarkeit eignen sich diese Dualphasenstähle insbesondere zur Herstellung von komplex geformten und hochbelastbaren Bauteilen, wie sie beispielsweise im Bereich des Karosseriebaus für Automobile benötigt werden.

Die Legierung der bekannten Dualphasenstähle setzt sich in der Regel aus einem Martensitanteil von 20% bis 70% und einem etwaigen Restaustenitanteil sowie Ferrit und/oder Bainit zusammen. Die gute Umformbarkeit von Dualphasenstählen wird durch eine relativ weiche Ferrit-Phase gewährleistet und die hohe Festigkeit wird durch die in einer Ferrit-Matrix eingebundenen festen Martensit- und Bainit-Phasen erzeugt. Die gewünschten Eigenschaften hinsichtlich Umformbarkeit und Festigkeit können bei Dualphasenstählen durch die Legierungszusammensetzung in weiten Bereichen gesteuert werden. So kann beispielsweise durch Zugabe von Silizium die Festigkeit durch Härtung des Ferrits bzw. Bainits erhöht werden. Durch Zugabe von Mangan kann die Martensitbildung positiv beeinflusst werden und es kann die Entstehung von Perlit verhindert werden. Auch die Zulegierung von Aluminium, Titan und Bor kann die Festigkeit erhöhen. Die Zulegierung von Aluminium wird zudem zur Desoxidation und zum Abbinden von ggf. in dem Stahl enthaltenem Stickstoff genutzt. Zur Ausbildung des mehrphasigen Legierungsgefüge werden Dualphasenstähle einer rekristallisierenden (bzw. austenitisierenden) Wärmebehandlung unterzogen, in der das Stahlband auf solche Temperaturen aufgeheizt und anschließend abgekühlt wird, dass sich die gewünschte mehrphasige Legierungsstruktur mit einer im Wesentlichen ferritisch-martensitischen Gefügeausbildung einstellt. Üblicherweise werden kaltgewalzte Stahlbänder aus wirtschaftlichen Gründen in einem Durchlaufglühverfahren im Glühofen rekristallisierend geglüht, wobei die Parameter des Glühofens, wie z. B. Durchlaufgeschwindigkeit, Glühtemperatur und Abkühlgeschwindigkeit, entsprechend dem geforderten Gefüge und den gewünschten Materialeigenschaften eingestellt werden.

Aus der DE 10 2006 054 300 A1 ist ein höherfester Dualphasenstahl sowie ein Verfahren zu dessen Herstellung bekannt, wobei in dem Herstellverfahren ein kalt- oder warmgewalztes Stahlband einer rekristallisierenden Durchlaufglühung in einem Durchlaufglühofen in einem Temperaturbereich von 820°C bis 1000°C unterzogen und das geglühte Stahlband anschließend von dieser Glühtemperatur mit einer Abkühlgeschwindigkeit zwischen 15 und 30°C pro Sekunde abgekühlt wird.

Für die Verwendung als Verpackungsstahl eignen sich die aus dem Automobilbau bekannten Dualphasenstähle in der Regel nicht, weil diese insbesondere wegen der hohen Anteile von Legierungselementen wie Mangan, Silizium, Chrom und Aluminium sehr teuer sind und weil beispielsweise für die Verwendung von Verpackungsstahl im Lebensmittelbereich einige der bekannten Legierungselemente nicht verwendet werden dürfen, weil eine Verunreinigung der Lebensmittel durch Diffusion der Legierungsbestandteile in das Füllgut ausgeschlossen werden muss. Außerdem haben viele der bekannten Dualphasenstähle eine so hohe Festigkeit, dass sie mit den üblicherweise für die Herstellung von Verpackungsstahl verwendeten Anlagen nicht kaltgewalzt werden können.

Verpackungsstahl muss darüber hinaus eine hohe Korrosionsbeständigkeit sowie eine gute Beständigkeit gegen Säuren aufweisen, da die Inhaltsstoffe von Verpackungen aus Verpackungsstahl, wie z.B. Getränke- und Lebensmitteldosen, häufig säurehaltig sind. Verpackungsstahl weist daher eine metallische Beschichtung als Korrosionsschutzschicht, bspw. aus Zinn, auf. Die Qualität dieser Korrosionsschutzschicht hängt ganz wesentlich von ihrem Haftvermögen an der Stahlblechoberfläche ab. Zur Verbesserung der Korrosionsbeständigkeit der Beschichtung und der Haftung der Korrosionsschutzschicht an der Stahlblechoberfläche wird bspw. bei der Herstellung von Weißblech (verzinntes Stahlblech) die galvanisch auf das Stahlblech aufgebrachte Zinnbeschichtung nach dem Beschichtungsvorgang aufgeschmolzen. Hierzu wird die auf das Stahlband galvanisch abgeschiedene Beschichtung auf eine nur wenig über dem Schmelzpunkt des Beschichtungsmaterials liegende Temperatur (bei einer Zinnbeschichtung bspw. auf 240°C) erhitzt und anschließend in einem Wasserbad abgeschreckt. Durch das Aufschmelzen der Zinn-Beschichtung erhält die Oberfläche der Beschichtung ein glänzendes Aussehen und die Porösität der Eisen-Zinn-Legierungsschicht zwischen der Beschichtung und dem Stahlblech wird vermindert, wodurch sich deren Korrosionsbeständigkeit erhöht und ihre Durchlässigkeit für aggressive Stoffe, beispielsweise organische Säuren, vermindert.

Das Aufschmelzen der Beschichtung kann beispielsweise durch induktive Erhitzung des beschichteten Stahlbands oder durch elektrisches Widerstandsheizen erfolgen. Aus der DE 1 186 158-A ist bspw. eine Anordnung zum induktiven Erwärmen von metallischen Bändern für das Aufschmelzen von insbesondere elektrolytisch aufgebrachten Beschichtungen auf Stahlbändern bekannt. Aus der DE 1 177 896 ist ein Verfahren zur Erhöhung des Korrosionsschutzes von metallisierten Eisenbändern oder -blechen bekannt, bei dem die metallische Beschichtung, welche insbesondere aus Zinn besteht, durch Erhöhung auf eine Temperatur oberhalb der Schmelztemperatur des Beschichtungsmaterials aufgeschmolzen und während des Kristallisationsvorgangs im Beschichtungsmaterial im Bereich zwischen Schmelztemperatur und Rekristallisationstemperatur des Beschichtungsmaterials Schwingungen höherer Frequenz ausgesetzt wird. Dadurch wird eine als nachteilig erkannte Kristallisation der Beschichtung vermieden. Aus der DE 196 46 362 A1 ist ein Verfahren zur Verbesserung der Oberflächenausbildung eines ZnAl-schmelztauchbeschichteten Feinblechs bekannt, wobei das beschichtete Blech im Durchlauf einer kurzzeitigen Erwärmung auf Temperaturen im Bereich von 20°C-100°C oberhalb der Liquidus-Temperatur des Beschichtungsmaterials unterzogen wird.

Schließlich lehrt die BE 1008976 A6, dass die Festigkeit und Verformbarkeit von Feinblech für Verpackungen durch sehr hohe Aufheiz- und Abkühlraten beim Glühen verbessert werden kann. Bei den bekannten Verfahren zum Aufschmelzen von metallischen Beschichtungen auf Stahlbändern oder -blechen wird in der Regel das gesamte Stahlband bzw. -blech, einschließlich der aufgebrachten Beschichtung, auf Temperaturen oberhalb der Schmelztemperatur des Beschichtungsmaterials erwärmt und anschließend, beispielweise in einem Wasserbad, wieder auf Normaltemperatur abgekühlt. Hierfür ist ein erheblicher Energiebedarf notwendig. Da das kaltgewalzte Stahlband oder -blech zur Widerherstellung seines ursprünglichen Gefügezustands und zur Verbesserung seiner Umformbarkeit vor dem Beschichten rekristallisierend geglüht werden muss, erfolgt in den bekannten Verfahren zur Herstellung von metallbeschichteten Stahlblechen eine zweimalige Erhitzung des gesamten Stahlblechs, nämlich zuerst beim Rekristallisationsglühen des kaltgewalzten und noch unbeschichteten Stahlblechs und dann nach dessen Beschichtung mit einer metallischen Korrosionsschutzschicht zum Aufschmelzen der aufgebrachten Beschichtung. Das zweimalige Erhitzen des Stahlblechs benötigt dabei sehr viel Energie und verteuert das Herstellungsverfahren erheblich.

Hiervon ausgehend, liegt der Erfindung die Aufgabe zugrunde, ein möglichst energieeffizientes Verfahren zur Herstellung eines höherfesten Verpackungsstahls mit guter Umformbarkeit und hoher Korrosionsbeständigkeit aufzuzeigen.

Diese Aufgaben werden mit einem Verfahren mit den Merkmalen des Anspruchs 1 gelöst. Bevorzugte Ausführungsbeispiele des Verfahrens sind in den abhängigen Ansprüchen aufgezeigt.

In dem erfindungsgemäßen Verfahren wird in einem ersten Schritt eine metallische Beschichtung auf ein Stahlblech aufgebracht und das beschichtete Stahlblech wird danach (und bevorzugt ohne weitere Zwischenschritte) in einem zweiten Schritt rekristallisierend geglüht, wobei das Stahlblech in einer Inertgasatmosphäre mittels elektromagnetischer Induktion auf Temperaturen im Rekristallisationsbereich erhitzt wird, wodurch die metallische Beschichtung aufschmilzt. In einem dritten Schritt, der sich zweckmäßig unmittelbar und ohne weitere Zwischenschritte an den zweiten Schritt anschließt, wird das beschichtete und geglühte Stahlblech abgeschreckt.

Das erfindungsgemäße Stahlblech wird aus einem un- oder niedriglegierten und kaltgewalzten Stahl mit einem Kohlenstoffgehalt von weniger als 0,1 % hergestellt. Wenn im Folgenden von Stahlblech die Rede ist, wird darunter auch ein Stahlband verstanden. Zweckmäßig handelt es sich bei dem Stahlblech um Fein- oder Feinstblech, das im Kaltwalzverfahren auf seine Enddicke gewalzt worden ist. Unter Feinblech wird dabei ein Blech mit einer Dicke von weniger als 3 mm verstanden und ein Feinstblech weist eine Dicke von weniger als 0,5 mm auf. Das erfindungsgemäße Stahlblech zeichnet sich neben dem niedrigen Kohlenstoffgehalt zweckmäßig auch durch niedrige Konzentrationen der weiteren Legierungsbestandteile aus. Der für die Herstellung des erfindungsgemäßen Stahlblechs verwendete Stahl weist insbesondere weniger als 0,5 Gew.-% und bevorzugt weniger als 0,4 Gew.% Mangan, weniger als 0,04 Gew.-% Silizium, weniger als 0,1 Gew.-% Aluminium und weniger als 0,1 Gew.-% Chrom auf. Der Stahl kann Legierungszusätze von Bor und/oder Niob und/oder Titan enthalten um die Festigkeit zu steigern, wobei die Zulegierung von Bor zweckmäßig im Bereich von 0,001-0,005 Gew.-% und die Zulegierung von Niob oder Titan im Bereich von 0,005-0,05 Gew.-% liegt. Bevorzugt werden dabei allerdings Gewichtsanteile für Nb < 0,03%.

Das kaltgewalzte Stahlblech wird (noch vor dem Rekristallisationsglühen) mit einer metallischen Korrosionsschutzschicht beschichtet, welche bevorzugt aus einem Metall mit einer Schmelztemperatur unterhalb von 700°C besteht. Als Beschichtungsmaterialien kommen daher insbesondere Zinn (mit einer Schmelztemperatur von ca. 232°C), Zink (mit einer Schmelztemperatur von ca. 419°C) und Aluminium (mit einer Schmelztemperatur von ca. 660°C) in Betracht. Die metallische Beschichtung wird zweckmäßig elektrolytisch auf eine oder beide Hauptflächen des Stahlblechs aufgebracht.

Zur Ausbildung eines mehrphasigen Legierungsgefüges und zum Aufschmelzen der aufgebrachten Beschichtung wird das beschichtete Stahlblech dann zunächst rekristallisierend geglüht und nach dem rekristallisierenden Glühen abgeschreckt. Um sowohl das rekristallisierende Glühen des Stahls als auch das Aufschmelzen der metallischen Beschichtung in einem einzigen Erhitzungsschritt zu gewährleisten, wird das beschichtete Stahlblech dabei auf Temperaturen erhitzt, welche oberhalb der Schmelztemperatur der metallischen Beschichtung und innerhalb des Rekristallisationsbereich des verwendeten Stahls liegen. Da die (unteren) Rekristallisationstemperaturen von Stahl in der Regel zwischen 550°C und 750°C und damit oberhalb der Schmelztemperatur der metallischen Beschichtung (bei Zinn bspw. ca. 232°C) liegen, wird die Beschichtung beim rekristallisierenden Glühen automatisch mit aufgeschmolzen. Durch das Aufschmelzen der Beschichtung wird die Korrosionsbeständigkeit des beschichteten Stahlblechs und die Haftung der Beschichtung an der Stahlblechoberfläche verbessert. Das Stahlband wird beim Rekristallisationsglühen mittels elektromagnetischer Induktion mit einer hohen Aufheizrate von mehr als 75 K/s und bevorzugt vom mehr als 100 K/s auf Temperaturen von bevorzugt mehr als 700°C erhitzt. Es hat sich in überraschender Weise gezeigt, dass dadurch ein für die Erzeugung einer hohen Festigkeit vorteilhaftes Mehrphasen-Gefüge in dem verwendeten Stahl des kaltgewalzten Stahlblechs erzeugt werden kann. Das rekristallisierende Glühen erfolgt zweckmäßig auf Temperaturen oberhalb des A1-Umwandlungspunkts. Durch eine rekristallisierende Wärmebehandlung mit einer Maximaltemperatur von Tₘₐₓ > Ac1, erfolgt ein Austenitisieren des Stahls und die anschließende rasche Abkühlung bildet ein mehrphasiges Gefüge im Stahl aus, welches Ferrit und mindestens einen der Gefügebestandteile Martensit, Bainit und/oder Restaustenit umfasst. Das Abschrecken erfolgt ebenfalls mit einer hohen Abkühlrate, um eine Härtesteigerung im Stahl zu erzeugen. Das Stahlblech wird nach dem Rekristallisationsglühen mit einer Kühlrate von mindestens 100 K/s und besonders bevorzugt von mehr als 500 K/s abgekühlt. Das so behandelte Stahlblech weist eine Zugfestigkeit von mindestens 500 MPa und eine Bruchdehnung von mehr als 6% auf.

Als besonders geeignet für die Herstellung des erfindungsgemäßen Verpackungsstahls hat sich das rekristallisierende (bzw. austenitisierende) Glühen des beschichteten Stahlblechs mittels elektromagnetischer Induktion erwiesen. Es wurde überraschend festgestellt, dass auf die Zulegierung von Legierungsbestandteilen, welche typischerweise in Dualphasenstählen enthalten sind, wie z. B. die Zulegierung von Mangan (welches typischerweise in den bekannten Dualphasenstählen einen Gewichtsanteil von 0,8-2,0 % hat), von Silizium (welches typischerweise in den bekannten Dualphasenstählen einen Gewichtsanteil von 0,1-0,5 % hat) und von Aluminium (welches in den bekannten Dualphasenstählen mit einem Gewichtsanteil von bis zu 0,2% zulegiert wird) verzichtet werden kann, wenn ein kaltgewalztes Stahlblech mit einem Kohlenstoffgehalt von weniger als 0,1 Gew.-% zunächst bei einer Aufheizrate von mehr als 75 K/s mittels elektromagnetischer Induktion rekristallisierend (bzw. austenitisierend) geglüht und anschließend mit einer hohen Kühlrate von wenigstens 100 K/s abgeschreckt wird.

Der überraschend beobachtete Einfluß der induktiven Erwärmung auf die Ausbildung und die Anordnung der Martensit-Phase in dem induktionsgeglühten Stahlbblech könnte wie folgt erklärt werden: Ferromagnetische Stoffe sind bei Abwesenheit eines äußeren Magnetfeldes nicht magnetisiert. Es gibt im Inneren dieser Stoffe jedoch Bereiche (Weiss-Bereiche), die auch bei Abwesenheit äußerer Magnetfelder bis zur Sättigung magnetisiert sind. Die Weiss-Bereiche werden durch Bloch-Wände getrennt. Durch Anlegen eines äußeren Magnetfeldes wachsen zunächst die günstig orientierten, also energetisch bevorzugten Weiss-Bereiche auf Kosten der Nachbarbezirke. Die Bloch-Wände verschieben sich dabei. Das Umklappen der Elektronenspins erfolgt dabei nicht gleichzeitig sondern die Spins wechseln ihre Richtung zuerst an den Grenzen der Weiss-Bereiche. Bei weiterer Feldsteigerung, wird die Richtung der Magnetisierung in die des Feldes gedreht, bis sie in allen Bereichen mit der des äußeren Magnetfeldes übereinstimmt und die Sättigung erreicht wird. Es ist außerdem bekannt, dass ein Magnetfeld die Bewegung von Versetzungen beeinflussen kann, ohne äußere anliegende mechanische Spannungen. Es erscheint nun plausibel, dass die Bloch-Wände bei ihrer Verschiebung Kohlenstoffatome und/oder Versetzungen mitnehmen. Dadurch sammeln sich Kohlenstoff und/oder Versetzungen in bestimmten Bereichen, in denen sich anschließend nach Glühung und Abschreckung Martensit bildet.

Zur Vermeidung von dunklen Verfärbungen an der Oberfläche der Beschichtung, welche durch Oxidation entstehen können, wird das Rekristallisationsglühen und das Aufschmelzen der metallischen Beschichtung erfindungsgemäß in einer Inertgasatmosphäre durchgeführt. Hierzu wird das beschichtete Stahlblech während des rekristallisierenden Glühens zweckmäßig durch einen mit einem Inertgas beaufschlagten Inertgaskanal geleitet.

Nachfolgend wird die Erfindung anhand eines Ausführungsbeispiels unter Bezugnahme auf die begleitenden Zeichnungen näher erläutert. Die Zeichnungen zeigen:
- **Figur 1:**: Glühkurve für das rekristallisierende Glühen des beschichteten Stahlblechs in dem erfindungsgemäßen Verfahren;
- **Figur 2:**: schematische Darstellung einer Vorrichtung zur Durchführung des erfindungsgemäßen Verfahrens;

Zur erfindungsgemäßen Herstellung von Stahlblechen zur Verwendung als Verpackungsstahl wurden im Stranggießen gefertigte und warmgewalzte sowie auf Coils gewickelte Stahlbänder aus Stählen mit folgender Zusammensetzung verwendet:
- C: max. 0,1%;
- N: max. 0,02 %;
- Mn: max. 0,5 %, bevorzugt weniger als 0,4 %;
- Si: max. 0,04 %, bevorzugt weniger als 0,02 %;
- Al: max. 0,1 %, bevorzugt weniger als 0,05 %;
- Cr: max. 0,1 %, bevorzugt weniger als 0,05 %;
- P: max. 0,03 %;
- Cu: max. 0,1 %;
- Ni: max. 0,1 %;
- Sn: max. 0,04 %;
- Mo: max. 0,04 %;
- V: max. 0,04 %;
- Ti: max. 0,05 %, bevorzugt weniger als 0,02 %;
- Nb: max. 0,05 %, bevorzugt weniger als 0,02 %;
- B: max. 0,005 %
- und andere Legierungsbestandteile sowie Verunreinigungen: max. 0,05 %,
- Rest Eisen.

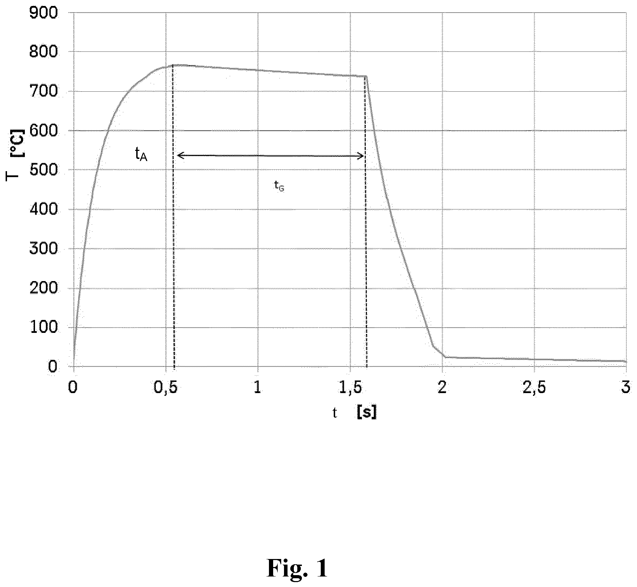

Dieses Stahlblech wurde zunächst unter einer Dickenreduktion von 50% bis 96% bis zu einer Enddicke im Bereich von ca. 0,5 mm kaltgewalzt und anschließend elektrolytisch in einer Bandverzinnungsanlage mit einer Zinnbeschichtung versehen. Nach dem Beschichtungsvorgang wurde das beschichtete Stahlblech in einem Induktionsofen durch Induktionserwärmung rekristallisierend geglüht. Hierbei wurde bspw. für eine Probengröße von 20x30 eine Induktionsspule mit einer Leistung von 50kW bei einer Frequenz von f=200kHz verwendet. Die Glühkurve ist in **Figur 1** gezeigt. Wie der Glühkurve der Figur 1 zu entnehmen ist, wurde das Stahlband innerhalb einer sehr kurzen Aufheizzeit t_{A}, welche typischerweise zwischen ca. 0,5 s und 10 s liegt, auf eine Maximaltemperatur Tₘₐₓ oberhalb der A₁-Temperatur (T (A₁) ≈ 725°C) erhitzt. Die Maximaltemperatur Tₘₐₓ liegt zweckmäßig unterhalb der Phasenübergangstemperatur T_{f} des ferromagnetischen Phasenübergangs (T_{f} ≈ 770°C). Die Temperatur des Stahlbands wurde dann über einen Glühzeitraum t_{G} von ca. 1 Sekunde auf einen Temperaturwert oberhalb der A₁-Temperatur aufrechterhalten. Während dieses Glühzeitraums t_{G} hat sich das Stahlband geringfügig von seiner Maximaltemperatur Tₘₐₓ von bspw. 750°C auf die A₁-Temperatur (ca. 725°C) abgekühlt. Während des Glühzeitraums ist die Zinnbeschichtung des Stahlblechs aufgeschmolzen worden.

Danach wurde das Stahlband durch rasches Einleiten in ein Abschreckbad abgeschreckt. Die Abkühlung des Stahlbands kann auch durch Aufsprühen von Wasserstrahlen oder mittels einer Gaskühlung erfolgen, welche beispielsweise durch eine Luftkühlung oder durch eine Jet-Kühlung mit Inertgas erzeugt werden kann. Zur Ausbildung der Mehrphasenstruktur in dem Stahl des Stahlblechs ist es zweckmäßig, eine rasche Abkühlung innerhalb eines Abkühlinterwals von ca. 0,25 bis 1,0 Sekunden auf Raumtemperatur (ca. 23°C) zu ermöglichen. Nach dem Abkühlen kann erforderlichenfalls noch ein Dressieren des beschichteten Stahlblechs erfolgen.

Durch Vergleichsversuche wurde fest gestellt, dass sich bei dieser Verfahrensführung dunkle Verfärbungen an der Oberfläche des beschichteten Stahlblechs ausbilden, die für die vorgesehene Verwendung als Verpackungsstahl unerwünscht sind. Es hat sich gezeigt, dass die dunklen Verfärbungen durch Bildung von Eisenoxid und Zinnoxid an der Oberfläche des beschichteten Stahlblechs hervorgerufen wird. Das Eisenoxid entsteht dabei durch eine Diffusion der Eisenionen des Stahlblechs durch die Zinnbeschichtung und Reaktion der durchdiffundierten Eisenionen mit Luft an der Oberfläche der Zinnbeschichtung. Um diese Oxidbildung an der Beschichtungsoberfläche zu vermeiden, erfolgt das rekristallisierende Glühen des Stahlblechs und das Aufschmelzen der Beschichtung gemäß der Erfindung in einer Inertgasatmosphäre. Hierfür wird das beschichtete Stahlblech während des rekristallisierenden Glühens zweckmäßig durch einen mit einem Inertgas beaufschlagten Inertgaskanal geleitet.

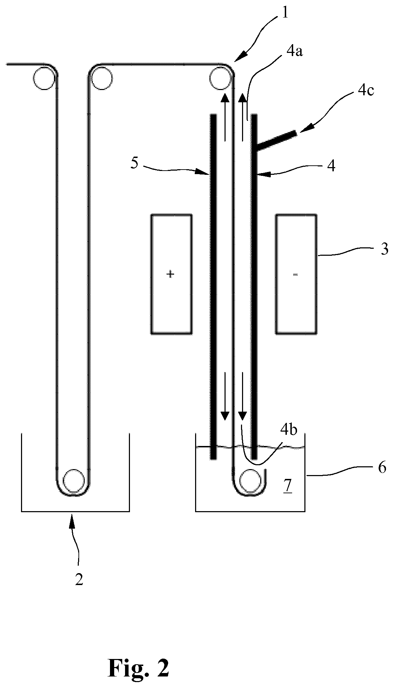

In **Figur 2** ist eine Vorrichtung zur Durchführung des erfindungsgemäßen Verfahrens schematisch dargestellt. Das bandförmige Stahlblech 1 wird von einer hier nicht dargestellten Antriebseinrichtung mit einer Bandgeschwindigkeit von wenigstens 200 m/min und bevorzugt von mehr als 600 m/min durch eine galvanische Bandverzinnungsanlage 2 bewegt, in der das Stahlblech 1 ein- oder beidseitig elektrolytisch mit einer Zinnbeschichtung beschichtet wird. An die Bandverzinnungsanlage 2 schließt sich eine induktive Glüheinrichtung mit wenigstens einer Induktionsspule 3 an, in der das beschichtete Stahlband 1 rekristallisierend geglüht wird. Zur Ausbildung einer Inertgasatmosphäre während des rekristallisierenden Glühens wird das Stahlband 1 mit der Bandgeschwindigkeit durch einen Inertgaskanal 4 geführt. Der Inertgaskanal 4 weist eine temperaturbeständige Kanalwand 5 auf, welche bevorzugt aus einem keramischen Material gefertigt ist und welche stirnseitige Öffnungen 4a, 4b zum Einführen bzw. Herausführen des Stahlblechs 1 sowie wenigstens eine Zufuhröffnung 4c zum Einleiten eines Inertgases aufweist. Bei dem Inertgas kann es sich bspw. um Argon- oder Stickstoffgas handeln. Es hat sich gezeigt, dass der Restsauerstoffgehalt in dem Inertgaskanal 4 während des rekristallisierenden Glühens bei höchstens 20 ppm und bevorzugt unter 15 ppm liegen sollte, um die Verfärbungen an der Oberfläche der Beschichtung zu vermeiden. Um den Inertgaskanal 4 herum ist die Induktionsspule 3 angeordnet, mit der das beschichtete Stahlblech zum rekristallisierenden Glühen und Aufschmelzen der Beschichtung induktiv erhitzt werden kann. Es können auch mehrere in Bandlaufrichtung hintereinander angeordnete Induktionsspulen um den Inertgaskanal 4 angeordnet sein. An den Inertgaskanal 4 schließt sich ein Abschreckbad 6 an, welches mit einer Kühlflüssigkeit 7, bspw. Wasser, gefüllt ist. Das aus dem Inertgaskanal 4 kommende Stahlblech 1 wird zur raschen Abkühlung in das Abschreckbad 6 geleitet. Um das Eindringen von Luft durch die untere stirnseitige Öffnung 4b des Inertgaskanals 4 zu verhindern, ragt das untere Ende des Inertgaskanals 4 mit der unteren Öffnung 4b in die Kühlflüssigkeit 7. Ein Eindringen von Luft in die obere stirnseitige Öffnung 4a des Inertgaskanals 4 wird durch den Überdruck des Inertgases verhindert, das durch die Zufuhröffnung 4c in den Intergaskanal 4 eingeleitet wird und von dort aus der oberen Öffnung 4a ausströmen kann.

Es wurde fest gestellt, dass durch die Inertgasatmosphäre ein Diffundieren von Eisen durch die (Zinn)Beschichtung während des rekristallisierenden Glühens verhindert wird. Dadurch kann sich kein dunkles Eisenoxid (Fe₂O₃) oder Eisen-/Zinnoxid (FeOₓSn) an der Zinnoberfläche bilden. Vielmehr bildet sich durch das Aufschmelzen der Zinnbeschichtung zwischen der Stahlblech-Oberfläche und der schmelzflüssigen Zinnbeschichtung eine (im Vergleich zur Dicke der Zinnbeschichtung) dünne und dichte Fe-Sn-Legierungsschicht aus, welche aus Eisen- und Zinnatomen besteht. Je nach Verfahrensparameter können Dicken der Legierungsschicht erzielt werden, welche einer Legierungsschichtauflage von weniger als 0,5 g/m² oder sogar von weniger als 0,3 g/m² entsprechen. Die Legierungsschicht bildet nach dem Abschrecken im Abschreckbad 6 eine gute Barriere gegen das Eindiffundieren von Luft und säurehaltigen Flüssigkeiten und erhöht daher die Korrosions- und Säure-Beständigkeit des erfindungsgemäß erzeugten Weißblechs. Die Fe-Sn-Legierungsschicht erhöht außerdem die Haftung der Beschichtung auf der Stahlblechoberfläche. Durch das Aufschmelzen der Beschichtung beim rekristallisierenden Glühen wird ferner die Porösität der Legierungsschicht erniedrigt und damit deren Korrosions- und Säure-Beständigkeit erhöht. Gleichzeitig führt das Aufschmelzen der Beschichtung zu einer Verbesserung der Oberflächenbrillanz der Beschichtung, da die ursprünglich matte Oberfläche der Beschichtung durch das Aufschmelzen und schnelle Abkühlen glänzend wird.

Das so hergestellte Weißblech wurde hinsichtlich seiner Festigkeit und seiner Bruchdehnung untersucht. Durch Vergleichsversuche konnte gezeigt werden, dass in allen Fällen die Bruchdehnung höher als 6% und in der Regel höher als 10% war und dass die Zugfestigkeit mindestens 500 MPa und in vielen Fällen sogar im Bereich von 600 bis 800 MPa aufgewiesen hat.

Durch eine Farbniederschlagätzung nach Klemm konnte nachgewiesen werden, dass die erfindungsgemäß hergerstellten Stahlbleche nach dem Rekristallisationsglühen ein Legierungsgefüge aufweisen, welches Ferrit als weiche Phase und Martensit sowie ggf. Bainit und/oder Restaustenit als harte Phase aufweist.

Durch Vergleichsversuche konnte ferner ermittelt werden, dass die besten Ergebnisse hinsichtlich Festigkeit um Umformbarkeit erzielt werden, wenn die Aufheizrate beim rekristallisierenden Glühen zwischen 200 K/s und 1200 K/s liegt und wenn das rekristallisierend geglühte Stahlband anschließend mit einer Kühlrate von mehr als 100 K/s abgekühlt wird. Apparativ zweckmäßig sind hierbei Abkühlraten zwischen 350 K/s und 1000 K/s, weil dann auf eine apparativ aufwendige Wasser- oder Ölkühlung verzichtet werden kann und die Kühlung mittels eines Kühlgases, wie z. B. Luft oder einem Inertgas, erfolgen kann. Die besten Ergebnisse bezüglich der Materialeigenschaften werden allerdings beim Abschrecken des beschichteten Stahlblechs in einem Abschreckbad mit Kühlraten von mehr als 1000 K/s erzielt. Zu hohe Abkühlraten bergen allerdings Rissgefahr und Verzug des Stahlblechs während des Abschreckens.

Das erfindungsgemäß hergestellte Stahlblech eignet sich hervorragend zur Verwendung als Verpackungsstahl. So können beispielsweise aus dem erfindungsgemäßen Stahlblech Konserven- oder Getränkedosen gefertigt werden, welche die insbesondere im Lebensmittelbereich geforderten hohen Anforderungen an die Korrosions- und Säurebeständigkeit von Verpackungen erfüllen. Die Beschichtung des Stahlblechs kann dabei je nach den Erfordernissen einseitig oder beidseitig erfolgen.

Gegenüber den aus dem Automobilbau bekannten Dualphasenstählen zeichnet sich das erfindungsgemäße Stahlblech zur Verwendung als Verpackungsstahl insbesondere durch die wesentlich niedrigeren Herstellkosten und durch den Vorteil aus, dass ein Stahl mit geringer Legierungskonzentration und wenigen Legierungsbestandteilen verwendet werden kann, wodurch Verunreinigungen der verpackten Lebensmittel vermieden werden können. Hinsichtlich der Festigkeit und der Umformbarkeit ist das erfindungsgemäße Stahlblech vergleichbar mit den aus dem Automobilbau bekannten Dualphasenstählen. Das walzharte Gefüge des kaltgewalzten Stahls wird durch das rekristallisierende Glühen in ein mehrphasiges Gefüge umgewandelt, welches eine hohe Zugfestigkeit und eine gute Bruchdehnung aufweist.

Das rekristallisierende Glühen erfolgt dabei - anders als bspw. bei den bekannten Verzinnungsverfahren - erst nach der Beschichtung des Stahlblechs mit einer metallischen Beschichtung. Es hat sich in überraschender Weise gezeigt, dass gemäß der Erfindung gleichzeitig mit dem rekristallisierenden Glühen die metallische Beschichtung (also bspw. die Zinn-Beschichtung) aufgeschmolzen werden kann, ohne dass die Qualität der Beschichtung darunter leidet. Trotz der vergleichsweisen hohen Temperaturen, die für das gleichzeitige Rekristallisationsglühen des Stahlblechs und das Aufschmelzen der metallischen Beschichtung eingehalten werden müssen, ist bspw. bei Weißblech keine vollständige Legierung des Beschichtungsmaterials (Zinn) mit dem Eisen des Stahlblechs und/oder eine vollständige Oxidation des Beschichtungsmaterials zu beobachten. Es bleibt also entgegen der Erwartung nach dem Rekristallisationsglühen des mit Zinn beschichteten Stahlblechs noch freies Zinn übrig, das die bekannten und vorteilhaften Eigenschaften von Weißblech (wie seine gute Gleitreibung, die Schweißbarkeit und die hohe optische Brillanz) erfüllen kann. Desweiteren hat sich gezeigt, dass sich trotz der vergleichsweise hohen Temperaturen, die beim Aufschmelzen der Zinnbeschichtung und gleichzeitigem Rekristallisationsglühen angewendet werden, eine dünne Eisen-Zinn-Legierungsschicht zwischen der Stahlblechoberfläche und der Zinnschicht ausbildet, welche die Korrosions- und Säurebeständigkeit des Produkts erheblich verbessert. Diese Ergebnisse lassen sich in entsprechender Weise auf Stahlbleche übertragen, die mit anderen Metallbeschichtungen, bspw. aus Zink oder Aluminium, beschichtet sind. Mit dem erfindungsgemäßen Verfahren können daher korrosionsbeständige und höherfeste Stahlbleche mit guter Bruchdehung erzeugt werden. Das erfindungsgemäße Verfahren erweist sich als sehr energieeffizient, weil die Gefügeumwandlung im Stahl und das Aufschmelzen der Beschichtung gleichzeitig in einem einzigen Verfahrensschritt erfolgt (rekristallisierendes Glühen mit anschließender Abschreckung). Das rekristallisierende Glühen des Stahlblechs kann daher (nach dem Beschichten) in der Beschichtungsanlage und nicht wie im Stand der Technik üblich (vor dem Beschichten) außerhalb der Beschichtungsanlage in einem gesonderten Glühschritt erfolgen. Dies ermöglicht eine schlanke Prozessführung und reduziert den apparativen Aufwand erheblich. Eine (zusätzliche) rekristallisierende Wärmebehandlung des Stahlblechs vor dem Beschichtungsvorgang ist in dem erfindungsgemäßen Verfahren nicht erforderlich.

## Patentansprüche

1. Verfahren zur Herstellung eines korrosionsbeständigen Stahlblechs aus einem un- oder niedriglegierten und kaltgewalzten Stahl mit einem Kohlenstoffgehalt von weniger als 0,1 %, **gekennzeichnet durch** folgende Schritte:
- Aufbringen einer metallischen Beschichtung auf das Stahlblech,
- rekristallisierendes Glühen des beschichteten Stahlblechs durch Erhitzen auf Temperaturen im Rekristallisationsbereich von mehr als 550°C mittels elektromagnetischer
Induktion in einer Inertgasatmosphäre mit einer Aufheizrate von mehr als 75 K/s, wobei die metallische Beschichtung beim rekristallisierenden Glühen aufschmilzt,
- Abschrecken des beschichteten und geglühten Stahlblechs mit einer Kühlrate von wenigstens 100 K/s.

2. Verfahren nach Anspruch 1, **dadurch gekennzeichnet, dass** das beschichtete Stahlblech nach dem rekristallisierenden Glühen mit einer Kühlrate von mehr als 500 K/s abgeschreckt wird, wodurch sich in dem Stahl ein mehrphasiges Gefüge ausbildet, welches Ferrit und mindestens einen der Gefügebestandteile Martensit, Bainit und/oder Restaustenit umfasst.

3. Verfahren nach Anspruch 1 oder 2, **dadurch gekennzeichnet, dass** das Stahlblech beim rekristallisierenden Glühen mit einer Aufheizrate von mehr als 100 K/s auf Temperaturen von mehr als 700°C erhitzt wird.

4. Verfahren nach einem der voranstehenden Ansprüche, **dadurch gekennzeichnet, dass** der Stahl
- einen Mangangehalt von weniger als 0,4 Gew.-%,
- einen Siliziumgehalt von weniger als 0,04 Gew.-%,
- einen Aluminiumgehalt von weniger als 0,1 Gew.-%
- und einen Chromgehalt von weniger als 0,1 Gew.-% aufweist.

5. Verfahren nach Anspruch 2, **dadurch gekennzeichnet, dass** das mehrphasige Gefüge zu mehr als 80% und bevorzugt zu wenigstens 95% aus den Gefügebestandteilen Ferrit, Martensit, Bainit und/oder Restaustenit besteht.

6. Verfahren nach einem der voranstehenden Ansprüche, **dadurch gekennzeichnet, dass** das Stahlblech aus einem niedriglegierten Stahl gefertigt ist, welcher Bor und/oder Niob und/oder Titan enthält.

7. Verfahren nach einem der voranstehenden Ansprüche, **dadurch gekennzeichnet, dass** das beschichtete Stahlblech beim rekristallisierenden Glühen auf Temperaturen oberhalb des A1-Umwandlungspunkts des verwendeten Stahls erhitzt wird.

8. Verfahren nach einem der voranstehenden Ansprüche, **dadurch gekennzeichnet, dass** das Stahlblech nach dem rekristallisierenden Glühen durch Einleiten des Stahlblechs in ein Kühlfluid abgeschreckt wird.

9. Verfahren nach einem der voranstehenden Ansprüche, wobei die metallische Beschichtung aus einem Metall oder einer Metallegierung mit einem Schmelzpunkt unterhalb von 700°C und insbesondere aus Zinn oder Zink besteht und elektrolytisch auf das Stahlblech (1) aufgebracht wird.

10. Verfahren nach einem der voranstehenden Ansprüche, **dadurch gekennzeichnet, dass** das beschichtete Stahlblech (1) während des rekristallisierenden Glühens durch einen mit einem Inertgas beaufschlagten Inertgaskanal (4) geleitet wird.

11. Verfahren nach Anspruch 10, **dadurch gekennzeichnet, dass** um den Inertgaskanal (4) herum wenigstens eine Induktionsspule (3) angeordnet ist, mit der das beschichtete Stahlblech (1) rekristallisierend geglüht wird.

12. Verfahren nach Anspruch 10 oder 11, **dadurch gekennzeichnet, dass** der Restsauerstoffgehalt in dem Inertgaskanal (4) während des rekristallisierenden Glühens bei höchstens 20 ppm und bevorzugt unter 15 ppm liegt.

13. Verfahren nach einem der Ansprüche 10 bis 12, **dadurch gekennzeichnet, dass** der Inertgaskanal (4) eine temperaturbeständige Kanalwand (5) aufweist, welche bevorzugt aus einem keramischen Material gefertigt ist und welche eine erste Öffnung (4a) zum Einführen des Stahlblechs (1), eine zweite Öffnung (4b) zum Herausführen des Stahlblechs (1) und wenigstens eine Zufuhröffnung (4c) zum Einleiten eines Inertgases aufweist.

14. Verfahren nach Anspruch 13, **dadurch gekennzeichnet, dass** die zweite Öffnung (4b) des Inertgaskanals (4) mit dem Kühlfluid in Verbindung steht.

15. Verwendung eines mit dem Verfahren nach einem der voranstehenden Ansprüche hergestellten Stahlblechs als Verpackungsstahl und insbesondere zur Herstellung von Dosen für Lebensmittel, Getränke und sonstige Füllgüter wie chemische oder biologische Produkte sowie zur Herstellung von Aerosoldosen und Verschlüssen.

## Claims

1. Method for the production of a corrosion-resistant steel sheet made of an unalloyed or low-alloy and cold-rolled steel with a carbon content of less than 0.1%, **characterized by** the following steps:
- applying a metal coating on the steel sheet;
- recrystallization annealing of the coated steel sheet by heating to temperatures in the recrystallizing range and more than 550°C by electromagnetic induction in an inert gas atmosphere, wherein the metal coating melts during the recrystallization annealing;
- quenching of the coated and annealed steel sheet with a cooling rate of more than 100 K/s.

2. Method according to Claim 1, **characterized in that**, after the recrystallization annealing, the coated steel sheet is quenched at a cooling rate of at least 500 K/s, whereby a multiphase structure is formed in the steel, which comprises ferrite and at least one of the structural components martensite, bainite, and/or residual austenite.

3. Method according to Claim 1 or 2, **characterized in that** the steel sheet is heated during the recrystallization annealing at a heating rate of more than 100 K/s to temperatures higher than 700°C.

4. Method according to one of the preceding claims, **characterized in that** the steel has
- a manganese content of less than 0.4 wt%;
- a silicon content of less than 0.04 wt%;
- an aluminum content of less than 0.1 wt%;
- and a chromium content of less than 0.1 wt%.

5. Method according to Claim 2, **characterized in that** the multiphase structure consists of more than 80%, and preferably at least 95% of the structural components ferrite, martensite, bainite, and/or residual austenite.

6. Method according to one of the preceding claims, **characterized in that** the steel sheet is made of a low-alloy steel, which contains boron and/or niobium and/or titanium.

7. Method according to one of the preceding claims, **characterized in that** the coated steel sheet is heated during the recrystallization annealing to temperatures above the A1 conversion point of the used steel.

8. Method according to one of the preceding claims, **characterized in that**, after the recrystallization annealing, the steel sheet is quenched by leading the steel sheet into a cooling fluid.

9. Method according to one of the preceding claims, wherein the metal coating consists of a metal or a metal alloy with a melting point below 700°C and, in particular, of tin or zinc, and is applied electrolytically on the steel sheet (1).

10. Method according to one of the preceding claims, **characterized in that** during the recrystallization annealing the coated steel sheet (1) is conducted through an inert gas channel (4) impinged with an inert gas.

11. Method according to Claim 10, **characterized in that** at least one induction coil (3), with which the coated steel sheet (1) is recrystallization annealed, is arranged around the inert gas channel (4).

12. Method according to Claim 10 or 11, **characterized in that** during the recrystallization annealing the residual oxygen content in the inert gas channel (4) is at most 20 ppm, and preferably below 15 ppm.

13. Method according to one of Claims 10 to 12, **characterized in that** the inert gas channel (4) has a temperature-resistant channel wall (5), which is preferably made of a ceramic material and which has a first opening (4a) for leading in the steel sheet (1), a second opening (4b) for leading out the steel sheet (1), and at least one supply opening (4c) for the introduction of an inert gas.

14. Method according to Claim 13, **characterized in that** the second opening (4b) of the inert gas channel (4) is connected with the cooling fluid.

15. Use of a steel sheet produced with the method according to one of the preceding claims, as a packaging steel and, in particular, for the production of cans for foods, beverages and other fillings, such as chemical or biological products, and for the production of aerosol cans and caps.

## Revendications

1. Procédé pour la fabrication d'une tôle d'acier résistante à la corrosion en un acier non allié ou faiblement allié et laminé à froid avec une teneur en carbone de moins de 0,1 %, **caractérisé par** les étapes suivantes :
- l'application d'un revêtement métallique sur la tôle d'acier,
- le recuit de recristallisation de la tôle d'acier revêtue par chauffage à des températures dans la plage de recristallisation de plus de 550 °C au moyen d'une induction électromagnétique dans une atmosphère de gaz inerte avec une vitesse de chauffage de plus de 75 K/s, dans lequel le revêtement métallique fond lors du recuit de recristallisation,
- le trempage de la tôle d'acier revêtue et recuite avec une vitesse de refroidissement d'au moins 100 K/s.

2. Procédé selon la revendication 1, **caractérisé en ce que**, après le recuit de recristallisation,la tôle d'acier revêtue est trempée avec une vitesse de refroidissement de plus de 500 K/s, moyennant quoi une structure à phases multiples se forme dans l'acier, laquelle comprend de la ferrite et au moins l'un des composants de structure martensite, bainite et/ou austénite résiduelle.

3. Procédé selon la revendication 1 ou 2, **caractérisé en ce que**, lors du recuit de recristallisation, la tôle d'acier est chauffée avec une vitesse de chauffage de plus de 100 K/s à des températures de plus de 700 °C.

4. Procédé selon l'une des revendications précédentes, **caractérisé en ce que** l'acier
- présente une teneur en manganèse de moins de 0,4 % en poids,
- une teneur en silicium de moins de 0,04 % en poids,
- une teneur en aluminium de moins de 0,1 % en poids,
- et une teneur en chrome de moins de 0,1 % en poids.

5. Procédé selon la revendication 2, **caractérisé en ce que** la structure à phases multiples se compose à plus de 80 % et de préférence au moins à 95 % des composants de structure ferrite, martensite, bainite et/ou austénite résiduelle.

6. Procédé selon l'une des revendications précédentes, **caractérisé en ce que** la tôle d'acier est fabriquée en un acier faiblement allié qui contient du bore et/ou du niobium et/ou du titane.

7. Procédé selon l'une des revendications précédentes, **caractérisé en ce que**, lors du recuit de recristallisation, la tôle d'acier revêtue est chauffée à des températures supérieures au point de transformation d'Al de l'acier utilisé.

8. Procédé selon l'une des revendications précédentes, **caractérisé en ce que**, après le recuit de recristallisation, la tôle d'acier est trempée par introduction de la tôle d'acier dans un fluide de refroidissement.

9. Procédé selon l'une des revendications précédentes, dans lequel le revêtement métallique se compose d'un métal ou d'un alliage métallique avec un point de fusion inférieur à 700 °C et en particulier d'étain ou de zinc et est appliqué électrolytiquement sur la tôle d'acier (1).

10. Procédé selon l'une des revendications précédentes, **caractérisé en ce que**, pendant le recuit de recristallisation, la tôle d'acier (1) revêtue est guidée à travers un canal de gaz inerte (4) alimenté par un gaz inerte.

11. Procédé selon la revendication 10, **caractérisé en ce qu'**au moins une bobine d'induction (3) est disposée autour du canal de gaz inerte (4), avec laquelle bobine la tôle d'acier (1) revêtue est soumise à un recuit de recristallisation.

12. Procédé selon la revendication 10 ou 11, **caractérisé en ce que**, pendant le recuit de recristallisation, la teneur en oxygène résiduelle dans le canal de gaz inerte (4) est de l'ordre de 20 ppm tout au plus et de préférence de moins de 15 ppm.

13. Procédé selon l'une des revendications 10 à 12, **caractérisé en ce que** le canal de gaz inerte (4) présente une paroi de canal (5) résistante à la température qui est de préférence fabriquée en un matériau céramique et qui présente une première ouverture (4a) pour l'introduction de la tôle d'acier (1), une deuxième ouverture (4b) pour la sortie de la tôle d'acier (1) et au moins une ouverture d'alimentation (4c) pour l'introduction d'un gaz inerte.

14. Procédé selon la revendication 13, **caractérisé en ce que** la deuxième ouverture (4b) du canal de gaz inerte (4) est en liaison avec un fluide de refroidissement.

15. Utilisation d'une tôle d'acier fabriquée avec le procédé selon l'une des revendications précédentes en tant qu'acier d'emballage et en particulier pour la fabrication de cannettes pour des produits alimentaires, des boissons et autres produits de remplissage tels des produits chimiques ou biologiques ainsi que pour la fabrication de bombes aérosol et de fermetures.
